# EUROPEAN PATENT APPLICATION

(11) **EP 1 348 578 A2**
(43) Date of publication of application: **01.10.2003**
(21) Application number: 03251564.5
(22) Date of filing: 14.03.2003
(51) Int. Cl.: B60B 3/04, B60B 3/10

(54) **Wheel assembly**

(30) Priority: 25.03.2002 US 367443 P
(71) Applicant: Meritor Do Brasil Ltda., CEP-13486-925 Limeira, SP (BR)
(72) Inventor: de A. Sereno, Paulo Celso, Limeira, Sao Paulo (BR)
(74) Representative: Jones, John Bryn

(57) **Abstract**

A wheel assembly includes a stamped disk (28) portion with integrally formed spokes (16) attached to a ring portion extending about the entire circumference of the wheel that is welded on a front side to a rim (12).

## Description

### BACKGROUND OF THE INVENTION

The present invention relates generally to the construction of a wheel for a motor vehicle, and specifically to the construction of a wheel from stampings.

Typically, a conventional wheel assembly for a motor vehicle will include a rim portion and a center portion for mounting to the axle of the motor vehicle. The center portion can be of a solid configuration attached to the rim. The rim includes a side wall. The sidewall provides for mounting of a tire to the rim and additionally provides a sealing surface for the tire to the rim such that the tire can be inflated to a desired pressure. A center portion includes a number of mounting holes corresponding to the axle end of the motor vehicle so that threaded members can be extended through the mounting holes and fitted with threaded fasteners to secure the wheel to the motor vehicle.

A conventional type of wheel assembly known in the art, includes a rim and a spoked center portion. The spoked center portion is stamped from a single piece of sheet metal and includes a plurality of radially extending spokes. Each of the spokes are attached to the rim assembly to form a completed wheel. Each of the spokes are attached to the rim assembly by a weld. The strength of the weld is required to be within the specified strength and fatigue limitations. In some wheel assemblies the weld between the stamped spoked portion and the rim is not strong enough to meet the specified criteria of a vehicle manufacturer. To further strengthen the wheel an additional weld is sometimes made on the front and back of the interface between the spoke and the rim. As appreciated, this increases the processing time and therefore the expense of the wheel. In addition to increased expense, the addition of more welds to each of the stamped spoke and to join the rim to the stamped spoke piece does not prevent cracking and degradation of the weld such that the weld does not meet the strength and durability criteria required by the vehicle manufacturers.

Accordingly, it is desirable to design a wheel assembly and process for constructing a wheel assembly that provides sufficient strength and durability.

### SUMMARY OF THE INVENTION

An embodiment disclosed in this application is a wheel assembly including a stamped disk portion having integrally formed spokes attached to a ring portion extending about the entire circumference of the wheel.

The wheel assembly includes a rim defining a sidewall portion and an inner diameter. A stamped disk defines a center mounting section with openings for mounting to the motor vehicle. Extending radially from the center mounting section is a plurality of spokes. At the end of each spoke is an integrally formed ring extending about the entire circumference of the stamped disk. The ring portion seats within the inner diameter of the rim to complete construction of the wheel assembly.

The disk portion is welded to the rim by way of a weld that extends substantially about the entire circumference of the wheel or rim. Because the weld is not intermittent such as when each specific spoke is individually welded to the rim of the wheel assembly, the wheel has increased strength and durability.

Further, processing of the wheel assembly is optimized by providing a process where only one continuous weld is required versus a series of intermittent smaller welds that would require indexing of a weld tool. Because the weld is continuous about the substantially entire circumference of the stamped disk and the rim, a single weld on one side of the stamped disk is all that is required to provide the desired strength of the wheel assembly.
At least one notch is formed in the outer circumference of the outer ring for providing a drainage hole for any excess protective coating. The notch also provides an opening for an air inlet mounted to the rim. In one embodiment of this invention, four notches are formed in the outer circumference to aid in balancing the wheel and to eliminate the need to orientate the notch to provide for drainage of excess protective coatings.

The wheel assembly of this invention provides desired strength and ease of manufacture while still providing the desired appearance of a spoked wheel.

### BRIEF DESCRIPTION OF THE DRAWINGS

Figure 1 is a perspective view of a wheel assembly;
Figure 2 is a perspective view of the stamped disk of the wheel assembly;
Figure 3 is an enlarged view of the interface between the wheel rim and the stamped disk;
Figure 4 is one embodiment of the blended in portion between the ring and a spoke; and
Figure 5 is another embodiment of a spoke blended into the ring.

### DETAILED DESCRIPTION OF A PREFERRED EMBODIMENT

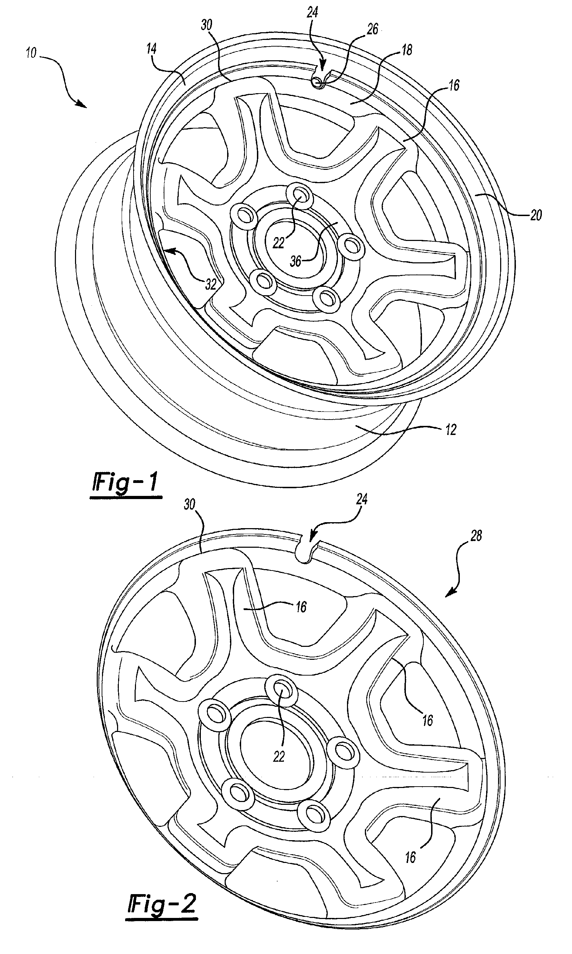

Referring to the Figures wherein like numerals indicate like or corresponding parts throughout the several views a wheel assembly for a motor vehicle is generally indicated at 10 in Figure 1. The wheel assembly 10 includes a rim 12 defining an inner diameter 32 and sidewalls 14. A tire (not shown) is mounted to the rim 12 and seals against the sidewalls 14 to provide an airtight chamber for inflation of the tire. The rim 12 also includes an opening 26 into which an air stem is mounted for inflation of the tire.

The rim 12 defines the inner diameter 32 including a shoulder 34 for mounting a stamped disk 28. The stamped disk 28 includes a ring portion 18 extending substantially about the entire circumference of the disk 28. A center portion 36 of the disk 28 includes a plurality of mounting openings 22 to which the wheel assembly 10 is mounted to a motor vehicle. Extending from the center portion 36 are spokes 16. Spokes 16 extend from the center portion 36 to the ring portion 18 and define areas of open space through the wheel assembly 10.

Referring to Figure 2 the stamped disk 28 is shown before assembly to the rim 12. The ring 18 of the stamped disk 28 includes at least one notched portion 24 corresponding to the opening 26 in the rim 12 for the air stem. The notched portion 24 also provides a drainage opening for excessive protective coating. During the manufacture of the wheel assembly 10 a protective coating is applied to the wheel. In some instances air may become trapped forming air bubbles within the protective coating. As appreciated it is undesirable to have air bubbles remain as the protective coating dries. The notch 24 provides an escape route for the evacuation of air bubbles in order to prevent degradation of the protective coating appearance.
Referring to Figure 2, preferably, the stamped disk 28 is fabricated from a single piece of sheet metal in a stamping process. The stamping process used to fabricate the disk 28 may be of any type known to a worker skilled in the art. Further, it is within the contemplation of this invention that other configurations of the stamped disk may be used in conjunction with the rim 12. As appreciated, spokes 16 extend from the center portion 36 to define a specific desired cosmetic appearance. The exact configuration and shape of each of the spokes 16 may be of any configuration and is application specific.

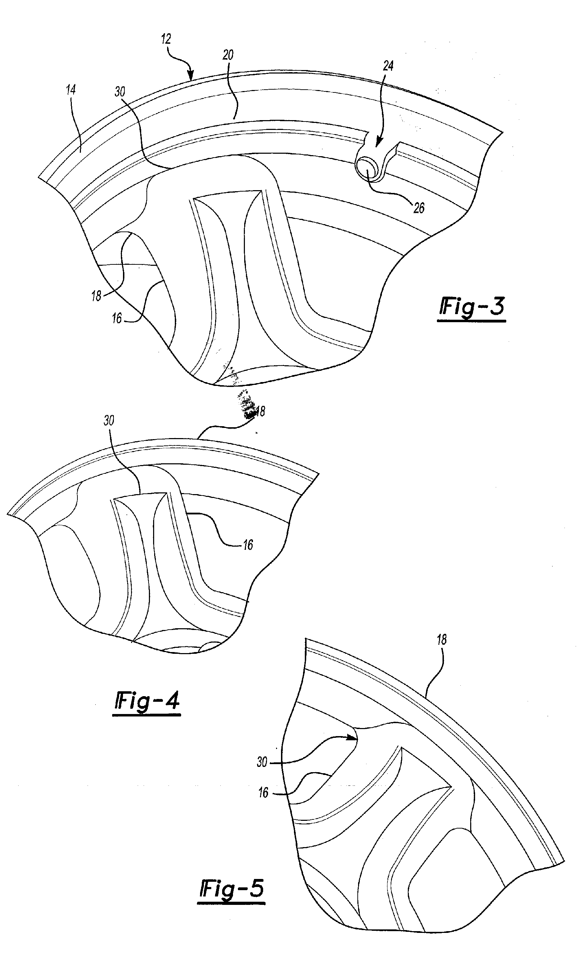

Referring to Figures 1 and 3, the stamped disk 28 is attached to the rim 12 by way of weld 20. The weld 20 extends about the entire circumference of the ring 28 and rim 12 except for the small notched out area 24 that corresponds to the opening 26 for the air stem opening. The stamped disk 28 sits on a shoulder 34 defined by the rim 12 and is welded on the front side of the rim 12 by a substantially continuous bead weld 20. The specific welding process used to attach the stamped disk 28 to rim 12 may be of any type known to a worker skilled in the art. Further, it is within the contemplation of this invention that the specific weld size and shape are determined by the specific application and a worker knowledgeable in the art would understand and know how such weld geometry is to be applied for specific applications of this invention.

The spoked portion 16 blends into the ring 18 at a junction 30. The junction 30 is designed to provide the appearance of a spoked wheel assembly as is desired by the vehicle manufacturers. This invention integrates the spoke 16 radiating from the center portion 36 to the ring portion 18 that is then welded to the rim 12 providing for a greater weld area along with a substantially continuous weld to provide additional strength to the wheel assembly 10.

Referring to Figures 4 and 5, the interface 30 between the spoke 16 and the ring 18 of the stamped disk 28 is of a desired shape to provide a desired cosmetic appearance between the spokes 16 and wheel assembly 10. As is appreciated, it is within the contemplation of this invention to provide spoke configurations dependent on application requirements and cosmetic desires corresponding to each specific application.

This invention also includes a method of fabricating a wheel assembly 10. (See Figure 1). The process includes the steps of stamping a rim 12 defining an inner diameter 32 and a side wall 14. The rim 12 includes a shoulder portion 34. The next step in the process is to stamp a disk portion 28 including a center portion 36 and spokes 16 radiating from the center portion 36 and connected to ring portion 18. The ring portion 18 defines the outer circumference of the disk 28. The stamped disk 28 is then placed onto the rim 12 on the mounting shoulder 34. The stamped disk 28 is then welded to the rim 12 by a weld 20 extending substantially about the entire circumference of the rim 12. In this embodiment of the invention, the weld 20 is provided on the outer face of the disk such that existing equipment can be used and problems associated with orientating a weld tool within inner diameter 32 of the rim 12 are eliminated.

Once the wheel 10 is assembled, a protective coating is applied to protect the material forming the wheel and to provide for an aesthetically pleasing appearance. The method includes the steps of applying a protective coating and evacuating excess material and air bubbles through at least one notch portion disposed on the outer circumference of the disk 28.

The wheel assembly 10 of this invention improves assembly conditions and provides for the best welding conditions of the wheel assembly which are that the weld 20 is easily accessible to weld tools and allows the use of existing equipment. Further, because the weld extends about the entire circumference of the disk and rim 12, a larger weld is provided which increases weld uniformity and wheel stiffness and strength.

The foregoing description is exemplary and not just a material specification. The invention has been described in an illustrative manner and it should be understood that the terminology used is intended to be in the nature of words of description rather than of limitation. Many modifications and variations of the present invention are possible in light of the above teachings. The preferred embodiments of this invention have been disclosed. However, one of ordinary skill in the art would recognize that certain modifications are within the scope of this invention.

## Claims

1. A wheel assembly (10) comprising:
a rim (12) defining an inner diameter;
a stamped disk (28) including a plurality of spoke portions (16) extending from a center ring portion (36) to an outer ring portion (18), said outer ring portion attached within said inner diameter of said rim; and
a notch (24) disposed within an outer periphery of said outer ring.

2. The wheel assembly of claim 1, wherein said stamped disk (28) includes front and rear sides, said front side including a weld bead for securing said stamped disk to said rim.

3. The wheel assembly of claim 2, wherein said weld bead is continuous about the periphery of said outer ring (18).

4. The wheel assembly of any preceding claim, wherein said disk (28) is stamped from a single sheet of material.

5. The wheel assembly of any preceding claim, further including mounting openings (22) disposed within said center portion for mounting said wheel assembly.

6. The wheel assembly of any preceding claim, further including a transition portion (30) between said spoke portions and said outer ring.

7. A method of fabricating a wheel assembly (10) comprising the steps of:
fabricating a rim (12) defining an inner diameter (32) and a shoulder;
stamping a disk portion from a single sheet of material to define spoke portions (16) extending radially from a center portion (36) to an outer ring (18);
forming a notch (24) in an outer periphery of said outer ring;
placing the stamped disk portion within the rim; and
welding the stamped disk portion to the rim.

8. The method of claim 7, wherein said step of forming a notch (24) within said outer ring (18) is further defined by forming a plurality of evenly spaced notches (24) about said outer ring for balancing said wheel assembly.

9. The method of claims 7 or 8, further including the step of painting said wheel assembly (10) and evacuating excess paint though said notch (24) formed in an outer periphery of said outer ring (18).

10. The method of any one of claims 7 to 9, wherein said step of welding said disk to said rim is further defined by welding only an interface (30) between said rim and said outer ring along an front face of said stamped disk.

11. The method of any one of claims 7 to 10, wherein said welding step is further defined as welding said outer disk 360 degrees about the face of said stamped disk.

12. The method of any one of claims 7 to 11, further including the step of forming a plurality of openings (22) within said center portion (36) disposed at equal radial distances.

13. The method of any one of claims 7 to 12, wherein stamping step is further defined by forming six spoke portions (16) within said disk.
